# EUROPÄISCHE PATENTANMELDUNG

(11) **EP 4 494 986 A1**
(43) Veröffentlichungstag der Anmeldung: **22.01.2025**
(21) Anmeldenummer: 23191143.9
(22) Anmeldetag: 11.08.2023
(51) Int. Cl.: B62J 11/04

(54) **HALTEVORRICHTUNG**

(30) Priorität: 18.07.2023 EP 23186107
(71) Anmelder: SKS metaplast Scheffer-Klute GmbH, 59846 Sundern (DE)
(72) Erfinder: Grabski, Karsten, 59469 Ense (DE); Kordes, Sven, 59846 Sundern (DE); Nöcker, Alexander, 59846 Sundern (DE)
(74) Vertreter: Schäperklaus, Jochen

(57) **Zusammenfassung**

Die Erfindung betrifft eine Haltevorrichtung (1) für die Anbringung einer Anbaukomponente, wie eines mobilen Endgeräts (200), eines Trinkflaschenhalters (200), eines Radschützers (200), einer Satteltasche (200), einer Packtasche (200), eines Beleuchtungselements (200), einer Luftpumpeneinheit (200), einer Werkzeugeinheit (200) oder dergleichen, an einem lenkergeführten Fahrzeug (100), wie einem Fahrrad (100), umfassend wenigstens eine Befestigungseinrichtung (2) zur Befestigung der Haltevorrichtung (1) an dem Fahrzeug (100) und wenigstens eine Verbindungseinrichtung (3) zur Verbindung des mobilen Endgeräts (200) mit der Befestigungseinrichtung (2). Die Verbindungseinrichtung (2) weist wenigstens eine erste Adaptereinheit (4) mit wenigstens einer Rückhalteeinrichtung (6) zur Aufnahme einer zweiten Adaptereinheit (8) der Verbindungseinrichtung (3) auf. Die Rückhalteeinrichtung (6) weist wenigstens ein Nutelement (6a) zur formschlüssigen Verriegelung der Verbindung auf. Lenkergeführtes Fahrzeug (100) mit Haltevorrichtung (1).

## Beschreibung

Die vorliegende Erfindung betrifft eine Haltevorrichtung für die Anbringung einer Anbaukomponente, wie beispielsweise eines mobilen Endgeräts und insbesondere eines Smartphones, eines Trinkflaschenhalter, eines Radschützers, einer Satteltasche, einer Packtasche, eines Beleuchtungselements, einer Luftpumpeneinheit, einer Werkzeugeinheit oder dergleichen an einem lenkergeführten Fahrzeug, wie einem Fahrrad, mit einer Befestigungseinrichtung zur Befestigung der Haltevorrichtung an dem lenkergeführten Fahrzeug und einer Verbindungseinrichtung zur Verbindung des mobilen Endgeräts an der Befestigungseinrichtung.

Lenkergeführte Fahrzeuge, wie Fahrräder, E-Bikes, Quads, Jetskis, Mofas, Mopeds, Motorräder und dergleichen, werden mittels einer Lenkereinrichtung mit wenigstens einem Lenker geführt. Weiter erfüllt sich die Nutzung von den oben genannten Anbaukomponenten und insbesondere von mobilen Endgeräten, wie Smartphones, Tablets, Navigationsgeräten, Kameras und dergleichen bei Nutzern von lenkergeführten Fahrzeugen großer Beliebtheit.

Aus der DE 10 2017 128 167 A1 ist eine Haltevorrichtung für ein Fahrrad zur Verbindung eines mobilen Endgeräts bekannt geworden. Zur Verbindung des mobilen Endgeräts wird ein Befestigungsteller mit nasenförmigen Vorsprüngen genutzt, welcher mit einem Aufnahmeraum, an dessen Ende ebenfalls Nasen ausgebildet sind, die in radialer Richtung in den Aufnahmeraum ragen, einen Bajonettverschluss bilden. Der Befestigungsteller weist einen Durchmesser von 40 mm und mehr auf.

Der große Durchmesser des Befestigungstellers hat sich in der Praxis als unkomfortabel herausgestellt, vor allem wenn die Halterung zwischen weiteren Anbauteilen wie Bremshebel und Klingel oder an dem Rahmen des Fahrzeugs Platz finden muss. Der Bajonettverschluss funktioniert nur in einer bestimmten Orientierung der Nasen an dem Befestigungsteller, sodass ein Nutzer durchaus einen merklichen zeitlichen Moment zur Herstellung der Verbindung aufbringen muss, in dem er einen wesentlichen Anteil seiner Aufmerksamkeit zur sicheren Herstellung der Verbindung braucht. Außerdem hat der große Befestigungsteller einen erheblichen Einfluss auf ein Erscheinungsbild des Fahrrads. Weiter sind die Herstellungskosten für den großen Befestigungsteller mit dem Bajonettverschluss hoch.

Es ist daher die Aufgabe der vorliegenden Erfindung eine Haltevorrichtung für ein lenkergeführtes Fahrzeug zur Verfügung zu stellen, welche einen höheren Bedienkomfort ermöglicht. Weiter soll die Haltevorrichtung insbesondere einen kleinen Bauraum aufweisen und vorzugsweise kostengünstig herstellbar sein.

Die Aufgabe wird gelöst durch eine Haltevorrichtung mit den Merkmalen nach Anspruch 1 und ein lenkergeführtes Fahrzeug mit den Merkmalen nach Anspruch 15. Bevorzugte Weiterbildungen sind Gegenstand der Unteransprüche. Weitere Merkmale und Vorteile sind Bestandteil der allgemeinen Beschreibung und der Beschreibung der Ausführungsbeispiele.

Die erfindungsgemäße Haltevorrichtung für die Anbringung wenigstens einer Anbaukomponente, wie eines mobilen Endgeräts, insbesondere eines Smartphones, eines Trinkflaschenhalters, eines Radschützers, einer Satteltasche, einer Packtasche, eines Beleuchtungselements, einer Luftpumpeneinheit, einer Werkzeugeinheit oder dergleichen an einem lenkergeführten Fahrzeug, wie einem Fahrrad, umfasst:
- wenigstens eine Befestigungseinrichtung zur Befestigung der Haltevorrichtung an dem Fahrzeug; und
- wenigstens ein Verbindungseinrichtung zur Verbindung des mobilen Endgeräts mit der Befestigungseinrichtung.
Die Verbindungseinrichtung weist wenigstens eine erste Adaptereinheit mit wenigstens einer Rückhalteeinrichtung zur Aufnahme einer zweiten Adaptereinheit auf und wobei die Rückhalteeinrichtung wenigstens ein Nutelement zur formschlüssigen Verriegelung der Verbindung aufweist.

Vorzugsweise ist wenigstens die erste Adaptereinheit fest, insbesondere einteilig, mit der Befestigungseinrichtung verbunden oder daran ausgebildet und/oder lösbar mit der Befestigungseinrichtung verbunden.

Die Erfindung hat viele Vorteile. Ein erheblicher Vorteil der Erfindung ist, dass das Nutelement zur Sicherung der Verbindung an der ersten Adaptereinheit ausgebildet ist. Da die Rückhalteeinrichtung nur das Nutelement und keine mechanisch beweglichen Komponenten umfassen muss, kann die erste Adaptereinheit besonders kleinbauend und insbesondere flach, d. h. mit kleiner Bauhöhe ausgeführt werden. Dadurch kann die Haltevorrichtung besonders kostengünstig hergestellt werden. Weitereignet sich die Haltevorrichtung darüber hinaus auch, um direkt durch einen Fahrzeughersteller verbaut zu werden. Weiter erlaubt das Nutelement eine einfache und komfortable Sicherung der Verbindung, z. B. durch ein, insbesondere bewegliches, Element, welches in die Nut eingreift und sich insbesondere auch darin verspannt. Weiter kann ein solches Nutelement zur Sicherung in Steckverbindungen eingesetzt werden, wobei eine Steckverbindung im Verhältnis besonders intuitiv und besonders schnell durch einen Nutzer herstellbar und auch wieder lösbar ist, z. B. durch einfaches Aufstecken und Abziehen.

Bevorzugt ist wenigstens das Formelement der Rückhalteeinrichtung und insbesondere die Rückhalteeinrichtung der ersten Adaptereinheit wenigstens achsensymmetrisch zu wenigstens einer ersten Symmetrieebene und insbesondere auch zu einer zweiten Symmetrieebene ausgebildet. Vorzugsweise erstreckt sich die zweite Symmetrieebene dabei quer, insbesondere rechtwinklig, zur ersten Symmetrieebene. Insbesondere erstrecken sich die Symmetrieebenen durch eine zentrale Mittelachse der Haltevorrichtung. Vorteilhaft weist die Rückhalteeinrichtung dadurch eine Geometrie auf, welche es einem Nutzer ermöglicht, eine zweite Adaptereinheit und insbesondere die Anbaukomponente in verschiedenen Orientierungen oder Winkelstellungen zur Mittelachse aufzunehmen. Dadurch kann der Nutzer eine Orientierung der Anbaukomponente besser an seine Bedürfnisse anpassen.

Besonders bevorzugt erstreckt sich das Nutelement wenigstens teilweise umfänglich um ein im Wesentlichen entlang einer Mittelachse ausgebildetes Formelement der Rückhalteeinrichtung. Insbesondere erstreckt sich das Nutelement vorzugsweise quer zur Mittelachse wenigstens teilweise entlang des Umfangs des Formelements. Vorteilhaft bildet das Nutelement dadurch einen in Richtung der Mittelachse hintergreifbaren Bereich und/oder einen Hinterschneidungsbereich, in den ein Formelement, wie ein Arm einer Spangeneinheit oder dergleichen, eingreifen kann, um eine sichere und formschlüssige Verbindung herzustellen, die nicht einfach abziehbar ist. Weiter vorteilhaft kann das Nutelement dadurch Kräfte besonders effektiv aufnehmen und in Richtung der Befestigungseinrichtung ableiten.

Vorzugsweise weist das Formelement wenigstens einen, vorzugsweise im Wesentlichen entlang der Mittelachse konstanten, mehreckigen und bevorzugt einen rechteckigen Querschnitt und besonders bevorzugt einen quadratischen Querschnitt auf. Vorteilhaft wird durch das mehreckige Formelement eine verdrehsichere Verbindung, mit einer zur Mittelachse festen Orientierung oder Winkelstellung, zwischen der ersten Adaptereinheit und der zweiten Adaptereinheit ermöglicht.

Bevorzugt weist die erste Adaptereinheit eine kleine maximale Längenausdehnung im Wesentlichen quer zur Mittelachse und insbesondere einen kleinen maximalen Außendurchmesser beziehungsweise einen kleinen maximalen Abstand auf. Nachfolgend wird exemplarisch der maximale Außendurchmesser genutzt, wobei der Begriff in der gesamten Anmeldung durch die Begriffe maximale Längenausdehnung quer zur Mittelachse und/oder maximaler Abstand austauschbar ist. Vorteilhaft weist die erste Adaptereinheit einen maximalen Außendurchmesser von weniger als 50 mm, bevorzugt weniger als 40 mm und besonders bevorzugt weniger als 30 mm auf. Darüber hinaus sind auch noch kleinere maximale Durchmesser von weniger als 20 mm oder 15 mm oder sogar 10 mm möglich. Vorzugsweise weist die Befestigungseinrichtung der Haltevorrichtung an dem Fahrzeug einen maximalen Außendurchmesser von weniger als 50 mm, bevorzugt weniger als 40 mm und besonders bevorzugt weniger als 30 mm auf. Darüber hinaus sind auch noch kleinere maximale Durchmesser von weniger als 20 mm oder 15 mm oder sogar 10 mm möglich. Vorteilhaft können die erste Adaptereinheit und die Befestigungseinrichtung an verschiedensten Stellen am Fahrzeug montiert werden, insbesondere ohne das diese optisch besonders hervortreten, wie z. B. an einer Lenkereinrichtung. Dabei kann die Haltevorrichtung im Durchmesser insbesondere so klein ausgestaltet werden, dass der Durchmesser der Befestigungseinrichtung an dem Fahrzeug in etwa einem Durchmesser einer Lenkstange oder einer Aufnahme an der Lenkstange eines Lenkervorbaus entspricht. Darüber hinaus kann der maximale Außendurchmesser auch noch kleiner sein.

Besonders bevorzugt ist die Befestigungseinrichtung an dem Fahrzeug an einem Lenkervorbau als Bestandteil einer Lenkereinrichtung eines Fahrzeugs, einem Fahrradrahmen, einer Fahrradgabel, einem Sattel oder dergleichen montierbar und/oder montiert. Vorteilhaft eignet sich die Variante, bei welcher die Befestigungseinrichtung inklusive der ersten Adaptereinheit der Verbindungseinrichtung an dem Fahrzeug montierbar ist. Weiter ist die Haltevorrichtung geeignet, um direkt durch einen Fahrzeughersteller bei der Fahrzeugmontage mitmontiert zu werden, da die Montage hier beispielsweise durch eine einfache Schraubverbindung erfolgen kann. Vorteilhaft bleibt bei einer Montage an einem Lenkervorbau der Lenkereinrichtung ein Lenker für andere oder weitere und insbesondere andere Haltevorrichtungen frei.

Vorteilhaft kann die Befestigungseinrichtung an dem Fahrzeug auch direkt an einer Lenkstange, einem Lenker oder auch an einem anderen Teil der Lenkereinrichtung aufgenommen und insbesondere verschraubt werden. Zweckmäßig weist die Befestigungseinrichtung der Haltevorrichtung an dem Fahrzeug eine Schraubeneinheit, mit wenigstens einer Schraube auf. Vorzugsweise umfasst die Lenkereinrichtung wenigstens auch eine Lenkergabel und/oder eine Lenkstange und/oder einen Lenker. Insbesondere kann die Befestigungseinrichtung alternativ oder zusätzlich wenigstens zwei miteinander verbindbare Teile aufweisen, die zusammen einen Lenker eines Zweirades umgreifen können und bei Verbindung miteinander die Befestigungseinrichtung der Haltevorrichtung an dem Zweirad festlegen. Darüber hinaus kann die Befestigungseinrichtung auch an einem Rahmenelement einer Rahmeneinrichtung oder dergleichen an dem Fahrzeug befestigt sein.

Insbesondere ist wenigstens eine zweite Adaptereinheit umfasst, welche an der ersten Adaptereinheit aufnehmbar ist. Vorzugsweise weist die zweite Adaptereinheit wenigstens eine Aufnahmeeinrichtung zur Aufnahme an der ersten Adaptereinheit auf. Insbesondere weist die Aufnahmeeinrichtung der zweiten Adaptereinheit hierzu wenigstens eine Form auf, welche an das Formelement der Rückhalteeinrichtung der ersten Adaptereinheit angepasst ist, sodass diese bereits in einem nicht verriegelten Zustand formschlüssig aneinander oder auch ineinander positionierbar sind. Dadurch wird vorteilhaft ein sicherer Halt erreicht, wobei die zweite Adaptereinheit verkippsicher gegen das Formelement an der ersten Adaptereinheit an der zweiten Adaptereinheit aufgenommen ist. Weiter werden eine relative Verschiebung der zweiten Adaptereinheit und des mobilen Endgeräts zur ersten Adaptereinheit verhindert. Vorzugsweise wird durch die formschlüssig zueinander ausgebildeten Konturen zwischen der ersten Adaptereinheit und der zweiten Adaptereinheit ein sicherer Halt gewährleistet.

Vorzugsweise umfasst die zweite Adaptereinheit wenigstens eine elastisch verformbare Spangeneinheit zur Verriegelung der Verbindung. Bevorzugt ist wenigstens ein Teilabschnitt wenigstens der Spangeneinheit in einem verriegelten Zustand wenigstens bereichsweise innerhalb des Nutelements angeordnet und/oder aufgenom m en.

Vorzugsweise ist eine Querschnittsform wenigstens eines Abschnitts, wie eines Arms der Spangeneinheit oder dergleichen, an eine Querschnittsform des Nutelements angepasst. Vorzugsweise weisen das Nutelement und/oder die Spangeneinheit wenigstens abschnittsweise einen runden und/oder einem mehreckige und/oder vieleckigen Querschnitt auf. Vorteilhaft ermöglicht ein runder oder vieleckiger Querschnitt einen geringen Bewegungswiderstand der Spangeneinheit gegenüber dem Nutelement und umgekehrt. Dadurch kann die Spangeneinheit einfach an Hindernissen, wie dem Formelement beim Aufnehmen und Abnehmen abgleiten.

Insbesondere ist die Spangeneinheit wenigstens teilweise aus einem metallischen Werkstoff, und vorzugsweise aus einem Federstahl ausgebildet. Vorteilhaft sind metallische Werkstoffe besonders robust und langlebig und verschleißfest. Darüber hinaus ist Federstahl besonders flexibel und dauerschwingfest, sodass problemlos elastisch verbogen werden kann, z.B. um eine Verbindung durch wenigstens teilweise Verformung der Spangeneinheit zu entriegeln. Weiter nimmt der Federstahl bei elastischer Verformung wieder selbstständig seine Ausgangsform an. Durch die internen Materialkräfte wirkt die Spangeneinheit wie eine Feder. Vorteilhaft ist die Spangeneinheit drahtförmig und/oder aus einem Draht ausgebildet.

Vorteilhaft umfasst die Spangeneinheit wenigstens einen Arm und insbesondere zwei Arme. Bevorzugt erstreckt sich wenigstens ein Abschnitt eines Arms der Spangeneinheit im bestimmungemäßen Gebrauch über, unterhalb und/oder oberhalb der Aufnahmeeinrichtung, d. h. auf der Seite des mobilen Endgeräts oder auf einer zu dem mobilen Endgerät gegenüberliegenden Seite der zweiten Adaptereinheit. Besonders bevorzugt erstrecken sich wenigstens Abschnitte von zwei Armen der Spangeneinheit wenigstens teilweise über, d. h. unterhalb und/oder oberhalb der Aufnahmeeinrichtung. Vorteilhaft kann die zweite Adaptereinheit dadurch durch einfaches Aufstecken auf das Formelement der Rückhalteeinrichtung aufgenommen und gleichzeitig verriegelt werden, wenn die Arme der Spangeneinheit elastisch ausgebildet sind, sodass diese sich beim Aufstecken durch die wirkenden Kräfte selbstständig an dem Formelement der Rückhalteeinrichtung verformen und dann in das Nutelement gleiten, sodass ein Schnellverschluss vorliegt. Das Formelement kann hierzu beispielsweise Fasen oder Rundungen aufweisen, welche eine Führung der Arme der Spangeneinheit erleichtern.

Vorzugsweise sind Arme der Spangeneinheit an gegenüberliegenden Seiten der Aufnahmeeinrichtung angeordnet. Insbesondere verlaufen die Arme im Wesentlichen parallel zueinander. Vorteilhaft umfassen die Arme der Spangeneinheit das Formelement der Rückhalteeinrichtung dadurch im verriegelten Zustand in dem Nutelement von zwei gegenüberliegenden Seiten, sodass die Verriegelung besonders sicher und insbesondere kippsicher ist.

Zweckmäßig ist die Spangeneinheit, insbesondere entlang des Nutelements, verschieblich an der zweiten Adaptereinheit und/oder an der Anbaukomponente gelagert. Vorteilhaft kann die Verbindung durch Verschiebung der Spangeneinheit besonders einfach und intuitiv durch Verschiebung der Spangeneinheit in eine entriegelte Position überführt werden, in welcher die zweite Adaptereinheit und die Anbaukomponente abnehmbar und insbesondere abziehbar ist. Vorteilhaft kann die Spangeneinheit durch Ziehen oder Drücken, vorzugsweise entlang einer Richtung des Nutelements in eine entriegelte Position überführt werden.

Insbesondere umfasst wenigstens ein Arm der Spangeneinheit wenigstens einen Spreizungsabschnitt zur Entriegelung der Verbindung bei einer Verschiebung der Spangeneinheit. Vorteilhaft kann der Spreizungsabschnitt wenigstens nach innen und/oder nach außen im Verhältnis zum Nutelement gebogen sein. Weiter kann die die Spangeneinheit einen Spreizungselement umfasst, welches bei einer Verschiebung des Arms der Spangeneinheit eine Spreizung des Arms der Spangeneinheit bewirkt und den Arm aus dem Nutelement herausdrückt. Die Spangeneinheit befindet sich dann vorzugsweise in einer entriegelten Position und die zweite Adaptereinheit ist abnehmbar.

. Insbesondere ist die Anbaukomponente an der zweiten Adaptereinheit ausgebildet und/oder aufgenommen. Die Anbaukomponente ist insbesondere als Aufnahmeschale für ein mobiles Endgerät wie ein Smartphone, einen Trinkflaschenhalter, einen Radschützer, eine Satteltasche, eine Packtasche, ein Beleuchtungselement, eine Luftpumpeneinheit, eine Werkzeugeinheit, wie eine Werkzeugtasche, oder dergleichen ausgebildet.

Vorteilhaft ist die Anbaukomponente als eine Aufnahmeschale zur Aufnahme eines mobilen Endgeräts ausgebildet. Die Aufnahmeschale umschließt und/oder umfasst das mobile Endgerät wenigstens bereichsweise. Vorteilhaft ermöglicht die Aufnahmeschale eine sichere Verbindung des mobilen Endgeräts an der Adaptereinheit und gleichzeitig einen Schutz des mobilen Endgeräts vor Beschädigungen, z. B. durch Steinschlag oder dergleichen.

Vorzugsweise umfasst die zweite Adaptereinheit, und insbesondere die Aufnahmeschale, wenigstens eine Magneteinheit insbesondere zur magnetischen Aufnahme des mobilen Endgeräts z. B. an einem induktiven Ladeadapter zur Energieversorgung und/oder zum, insbesondere induktiven, Laden des mobilen Endgeräts. Vorteilhaft umfasst die Magneteinheit wenigstens einen magnetischen Körper und insbesondere eine Mehrzahl an magnetischen Körpern. Besonders vorteilhaft können dadurch Magnetkräfte zwischen der zweiten Adaptereinheit und/oder der Aufnahmeschale und wenigstens einem magnetischen Werkstoff des mobilen Endgeräts erzeugt werden, welche den Halt des mobilen Endgeräts an der zweiten Adaptereinheit und/oder an der Aufnahmeschale wenigstens unterstützen. Darüber hinaus ist es sogar möglich, dass eine Haltekraft des mobilen Endgeräts an der zweiten Adaptereinheit und/oder der Aufnahmeschale allein durch die Magneteinheit erzeugbar ist. Besonders vorteilhaft kann die Magneteinheit so dimensioniert sein, dass die Magnetkräfte für Erschütterungen in alltäglichen Fahrsituationen mehr als ausreichend dimensioniert sind. Alternativ oder zusätzlich kann die magnetische Sicherungseinheit auch wenigstens eine Elektromagneteinheit umfassen, wobei die Magnetkräfte nicht permanent, sondern durch elektrischen Strom erzeugt werden, welcher schaltbar ist.

Bevorzugt kann die zweite Adaptereinheit und insbesondere die aufgenommene Anbaukomponente, relativ zu der ersten Adaptereinheit in zwei verschiedenen Stellungen verriegelt werden, wobei die beiden Stellungen insbesondere einen Winkel von 90° miteinander einschließen. Vorteilhaft kann die zweite Adaptereinheit dadurch in verschiedenen Winkelstellungen und/oder Orientierungen zu der ersten Adaptereinheit an der ersten Adaptereinheit aufgenommen werden. Vorteilhaft kann dadurch auch ein mit der zweiten Adaptereinheit in Verbindung stehende Anbaukomponente in verschiedenen Stellungen aufgenommen werden, z. B. hochkant oder quer.

Vorzugsweise umfasst die Verbindungseinrichtung wenigstens eine Zentrierungseinheit zur noch besseren Zentrierung der zweiten Adaptereinheit an der ersten Adaptereinheit. Insbesondere umfasst die Zentriereinheit eine oder mehrere ineinandergreifende Formelemente, die an der ersten Adaptereinheit und/oder der zweiten Adaptereinheit ausgebildet sind, wie Rippen, welche in komplementäre Rillen eingreifen. Die Rippen und/oder Rillen können dabei an der ersten und/oder der zweiten Adaptereinheit ausgebildet sein. Insbesondere sind mehrere Rippen und/oder Rillen winklig zueinander versetzt angeordnet. Vorteilhaft ermöglicht die Zentrierungseinheit eine besonders genaue Ausrichtung der ersten Adaptereinheit zur zweiten Adaptereinheit.

Insbesondere umfasst die Verbindungseinrichtung wenigstens eine elastische Federeinheit, insbesondere zur spielfreien Aufnahme der zweiten Adaptereinheit an der ersten Adaptereinheit. Vorzugsweise umfasst die Federeinheit wenigstens und insbesondere zwei oder mehr Federelemente. Zweckmäßig ist das Federelement als elastischer Köper, wie ein Elastomer und insbesondere wie Gummi ausgebildet. Vorzugsweise ist das Federelement als Elastomerring oder Gummiring ausgebildet und bevorzugt als O-Ring aus einem Elastomer ausgebildet. Vorteilhaft kompensiert die Federeinheit ein Spiel zwischen der zweiten Adaptereinheit und der ersten Adaptereinheit im aufgenommenen Zustand, sodass die Haltekräfte verschleißfrei übertragen werden können. Insbesondere ist ein Federelement an der zweiten Adaptereinheit aufgenommen. Vorzugsweise verspannt sich das elastische Federelement wenigsten teilweise gegen die erste Adaptereinheit beim Aufstecken. Dadurch wird ein spielfreier Halt erreicht.

Insbesondere ist eine Kommunikationseinheit wie ein NFC-Chip umfasst. Vorteilhaft ermöglicht die Kommunikationseinheit eine insbesondere drahtlose Übertragung von Informationen und Daten zwischen dem Fahrzeug und der Anbaukomponente, insbesondere einem mobilen Endgerät. Vorteilhaft können so, insbesondere kontaktlos, beispielsweise Informationen, wie aktuelle Sensordaten, aufgenommen und durch das mobile Endgerät ausgewertet werden.

Bevorzugt umfasst die Haltvorrichtung wenigstens eine Zwischenspeichereinheit für elektrische Energie. Insbesondere kann die Zwischenspeichereinheit zwischen der ersten Adaptereinheit und der zweiten Adaptereinheit zwischengeschaltet werden. Hierzu weist die Zwischenspeichereinheit vorzugsweise ebenfalls Adaptereinheiten auf, welche in die erste Adaptereinheit und die zweite Adaptereinheit eingreifen können. Die Zwischenspeichereinheit kann so ausgebildet sein, dass es Verbindungselemente für die Verbindung mit fahrzeugseitigen Stromquellen aufweist, wobei die Zwischenspeichereinheit insbesondere so ausgebildet ist, dass sie von fahrzeugseitigen Stromquellen, beispielsweise von einem Dynamo oder einer Batterie eines E-Bikes, aufgeladen werden kann. Weiter kann die Zwischenspeichereinheit Verbindungselemente für die Verbindung mit externen Stromquellen aufweisen, wobei die Zwischenspeichereinheit insbesondere so ausgebildet sind, dass sie von externen Stromquellen, beispielsweise über eine USB-Schnittstelle, aufgeladen werden können. Insbesondere sind ein oder mehrere Zwischenspeichereinheiten in einem separaten Gehäuse untergebracht, sodass es insbesondere von der Befestigungseinrichtung getrennt werden kann.

Ein erfindungsgemäßes lenkergeführtes Fahrzeug, welches insbesondere als Fahrrad ausgebildet ist, umfasst wenigstens eine zuvor beschriebene Haltevorrichtung. Vorteilhafte Weiterbildungen ergeben sich aus der gesamten Anmeldung. Insbesondere ist die Haltevorrichtung wenigstens teilweise an einem Lenkervorbau einer Lenkereinrichtung und/oder wenigstens einem Rahmenelement einer Rahmeneinrichtung montiert. Vorteilhaft ist die Haltevorrichtung kostengünstig herstellbar und kleinbauend und komfortabel bedienbar.

Vorteilhafte Weiterbildungen und Eigenschaften des erfindungsgemäßen lenkergeführten Fahrzeugs ergeben sich aus der gesamten Anmeldung.

Weitere Merkmale und Vorteile der Ausführungsbeispiele der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische Darstellung der erfindungsgemäßen Haltevorrichtung zur Aufnahme verschiedener Anbaukomponenten;
- Fig. 2: eine schematische perspektivische Ansicht eines erfindungsgemäßen lenkergeführten Fahrzeugs mit einer erfindungsgemäßen Haltevorrichtung mit einem mobilen Endgerät, wobei das mobile Endgerät in einer ersten Stellung verriegelt ist;
- Fig. 3: eine schematische perspektivische Ansicht des lenkergeführten Fahrzeugs mit der Haltevorrichtung mit dem mobilen Endgerät, wobei das mobile Endgerät in einer zweiten Stellung verriegelt ist;
- Fig. 4: eine schematische Seitenansicht der Haltevorrichtung in verriegelter Position;
- Fig. 5: eine schematische Schnittansicht der Haltevorrichtung in verriegelter Position;
- Fig. 6: eine schematische Ansicht der Haltevorrichtung in verriegelter Position von unten;
- Fig. 7: eine schematische Draufansicht auf die Haltevorrichtung in verriegelter Position;
- Fig. 8: eine schematische perspektivische Ansicht der Haltevorrichtung in verriegelter Position;
- Fig. 9: eine schematische Seitenansicht der Haltevorrichtung in entriegelter Position;
- Fig. 10: eine schematische Schnittansicht der Haltevorrichtung in entriegelter Position;
- Fig. 11: eine schematische Ansicht der Haltevorrichtung in entriegelter Position von unten;
- Fig. 12: eine schematische Draufansicht auf die Haltevorrichtung in entriegelter Position;
- Fig. 13: eine schematische perspektivische Ansicht der Haltevorrichtung in entriegelter Position;
- Fig. 14: eine schematische Seitenansicht der Haltevorrichtung, wobei die zweite Adaptereinheit von der ersten Adaptereinheit abgenommen ist;
- Fig. 15: eine schematische Schnittansicht der Haltevorrichtung, wobei die zweite Adaptereinheit von der ersten Adaptereinheit abgenommen ist;
- Fig. 16: eine schematische Ansicht der Haltevorrichtung von unten, wobei die die zweite Adaptereinheit von der ersten Adaptereinheit abgenommen ist;
- Fig. 17: eine schematische Draufansicht der Haltevorrichtung, wobei die zweite Adaptereinheit von der ersten Adaptereinheit abgenommen ist;
- Fig. 18: eine schematische perspektivische Ansicht der Haltevorrichtung, wobei die die zweite Adaptereinheit von der ersten Adaptereinheit abgenommen ist;
- Fig. 19: eine schematische Ansicht einer zweiten Adaptereinheit einer weiteren Ausführungsform einer erfindungsgemäßen Haltevorrichtung mit Rillen einer Zentriereinheit von unten;
- Fig. 20: eine schematische Ansicht einer ersten Adaptereinheit der weiteren Ausführungsform einer erfindungsgemäßen Haltevorrichtung mit Rippen der Zentriereinheit von oben.
- Fig. 21: eine schematische perspektivische Ansicht der zweiten Adaptereinheit einer weiteren Ausführungsform der Haltevorrichtung mit Rillen einer Zentriereinheit;
- Fig. 22: eine schematische perspektivische Ansicht der ersten Adaptereinheit der weiteren Ausführungsform einer Haltevorrichtung mit Rippen der Zentriereinheit;
- Fig. 23: eine schematische Seitenansicht einer weiteren Ausführungsform der erfindungsgemäßen Haltevorrichtung mit einer elastischen Federeinheit;
- Fig. 24: eine schematische Schnittansicht der Haltevorrichtung mit der elastischen Federeinheit;
- Fig, 25: eine weitere schematische Schnittansicht der Haltevorrichtung mit der elastischen Federeinheit; und
- Fig. 26: eine weitere schematische Schnittansicht der Haltevorrichtung mit der elastischen Federeinheit.

Es ist nicht notwendig, dass eine erfindungsgemäße Haltevorrichtung alle nachfolgend beschriebenen Merkmale aufweist. Es ist auch möglich, dass eine erfindungsgemäße Haltevorrichtung nur einzelne Merkmale des nachfolgend beschriebenen Ausführungsbeispiels aufweist.

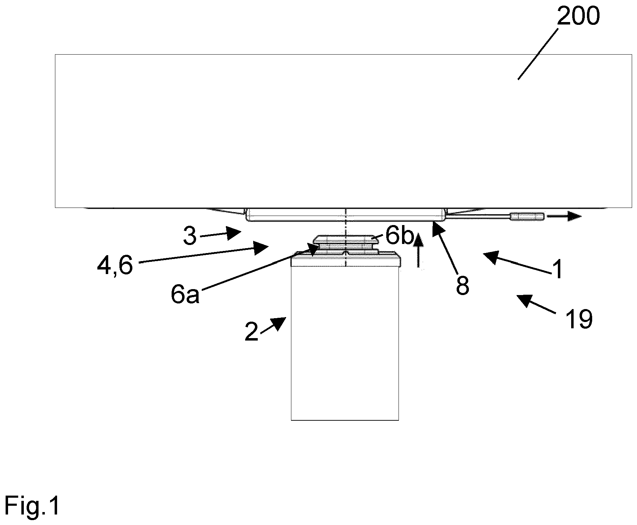

Fig. 1 zeigt eine schematische Darstellung der erfindungsgemäßen Haltevorrichtung 1 zur Aufnahme verschiedener Anbaukomponenten 200. Die Haltevorrichtung umfasst eine Befestigungseinrichtung 2 zur Befestigung der Haltevorrichtung an dem lenkergeführten Fahrzeug 100 und eine Verbindungseinrichtung 3 mit einer ersten Adaptereinheit 4 und einer zweiten Adaptereinheit 8. Die erste Adaptereinheit 4 umfasst eine Rückhalteeinrichtung 5 mit einem Nutelement 6a, an welchem die zweite Adaptereinheit 8 aufnehmbar und verriegelbar ist. Die Anbaukomponente kann hier beispielsweise durch ein mobiles Endgerät 200, wie ein Smartphone 200 einen Trinkflaschenhalter 200, einen Radschützer 200, eine Satteltasche 200, eine Packtasche 200, ein Beleuchtungselement 200, eine Luftpumpeneinheit 200, eine Werkzeugeinheit 200 oder dergleichen.

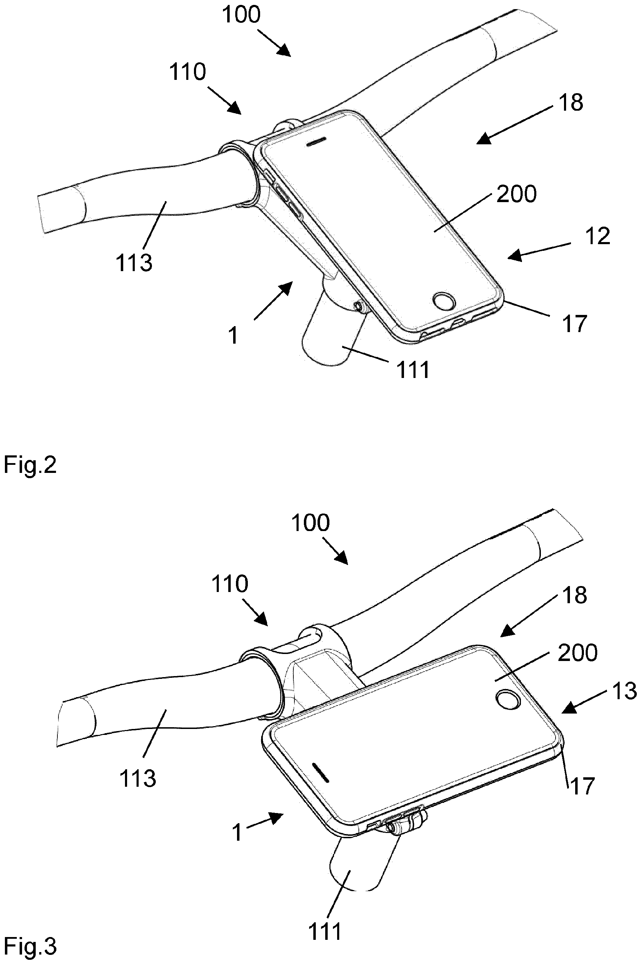

Fig. 2 zeigt eine schematische perspektivische Ansicht eines erfindungsgemäßen lenkergeführten Fahrzeugs 100 mit einer erfindungsgemäßen Haltevorrichtung 1. Die Anbaukomponente 200 ist hier als mobiles Endgerät 200 ausgebildet. Weitere Details werden hier anhand des dieses Ausführungsbeispiels exemplarisch diskutiert. Das mobile Endgerät 200 ist hier in einer ersten Stellung 12 der Haltevorrichtung 1 in verriegelter Position 18 aufgenommen, d. h. hier hochkant. Die Haltevorrichtung 1 ist hier an einem Lenkervorbau 111 der Lenkereinrichtung 100 befestigt. Alternativ kann die Haltevorrichtung 1 auch an einen Lenker 113 der Lenkereinrichtung 110 oder dergleichen befestigt werden. Das mobile Endgerät 200 ist hier in einer Aufnahmeschale 17 aufgenommen.

Fig. 3 zeigt eine schematische perspektivische Ansicht des lenkergeführten Fahrzeugs 100 mit der Haltevorrichtung 1 mit dem mobilen Endgerät 200, wobei das mobile Endgerät 200 in einer zweiten Stellung 13 verriegelt ist, d.h. hier quer im Verhältnis zur ersten Stellung 12, siehe Fig. 2.

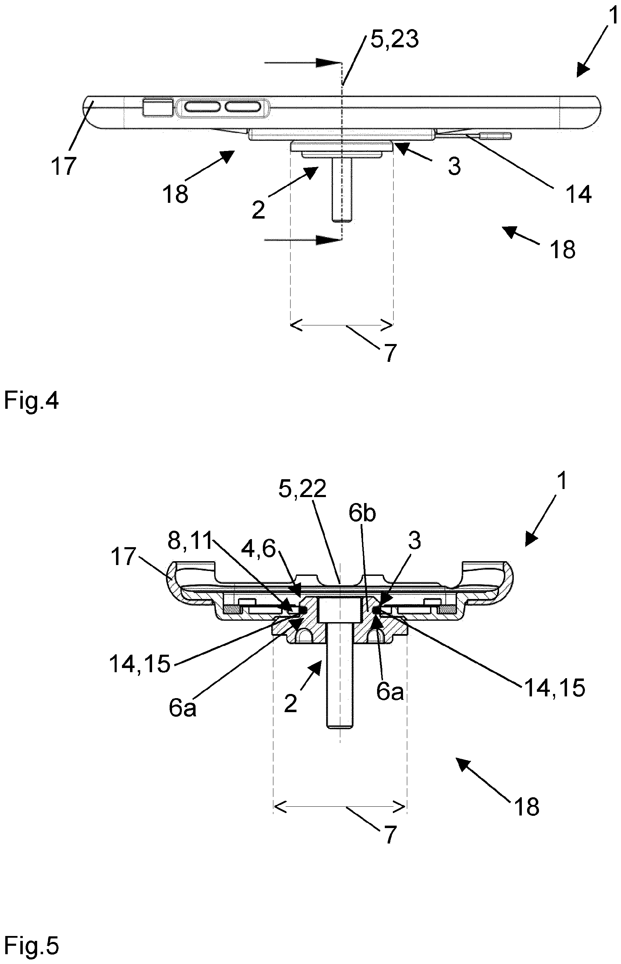

Fig. 4 zeigt eine schematische Seitenansicht der Haltevorrichtung 1 in einer verriegelter Position 18. Die Haltevorrichtung 1 ist über eine Befestigungseinrichtung 2 an dem Fahrzeug 100 befestigt. Hier umfasst die Befestigungseinrichtung 2 eine Schraube zur Befestigung an dem Lenkervorbau 111, siehe Fig.2 und 3. Die Befestigungseinrichtung 2 ist mit einer Verbindungseinrichtung 3 verbunden. Die Verbindungseinrichtung 3 ermöglicht eine Herstellung einer lösbaren Verbindung zwischen der ersten Adaptereinheit 4 und der zweiten Adaptereinheit 8. Die Haltevorrichtung 1 erstreckt sich hier entlang einer Mittelachse 5. Weiter sind die Befestigungseinrichtung 2 und die erste Adaptereinheit 4 der Verbindungseinrichtung 3 achsensymmetrisch zu einer zweiten Symmetrieebene 23 ausgebildet.

Ein maximaler Außendurchmesser 7 der ersten Adaptereinheit 4 und der Befestigungseinrichtung 2 beträgt hier 32 mm, sodass weder die erste Adaptereinheit 4 noch die Befestigungseinrichtung 2 über die Außenmaße des Lenkervorbaus 111 überstehen, vgl. Fig. 2 und Fig. 3. Dadurch eignet sich die Haltevorrichtung 1 besonders, um durch einen Fahrzeughersteller vormontiert zu werden, da die Befestigungseinrichtung 2 und die erste Adaptereinheit 4 besonders kleinbauend sind. Weiter kann die Haltevorrichtung 1 z. B. als Spritzgussteil besonders kostengünstig hergestellt werden.

Die erste Adaptereinheit 4 eine Rückhalteeinrichtung 6 mit einem Formelement 6b auf, welches sich entlang der Mittelachse 5 erstreckt. Weiter umfasst die Rückhalteeinrichtung 6 ein Nutelement 6a, welches sich hier umfänglich um das Formelement 6b der Rückhalteeinrichtung 6 erstreckt und einen Hinterschnitt beziehungsweise einen Hinterschneidungsbereich bildet.

Die zweite Adaptereinheit 8 umfasst hier eine Aufnahmeeinrichtung 11. Die Aufnahmeeinrichtung 11 weist eine Kontur auf, welcher einer Kontur des Formelement 6b der Rückhalteeinrichtung 6 der ersten Adaptereinheit 4 entspricht, sodass die zweite Adaptereinheit 8 hier formschlüssig auf an der ersten Adaptereinheit 4 aufgenommen ist.

Zur Verriegelung der Verbindung zwischen der ersten Adaptereinheit 4 und der zweiten Adaptereinheit 8 umfasst die Haltevorrichtung 1 hier eine Spangeneinheit 14 mit zwei Armen 15. Die Spangeneinheit 13 besteht hier aus einem Federstahl und ist elastisch biegsam. Die Spangeneinheit 14 ist hier beweglich an der zweiten Adaptereinheit 8 gelagert. Die Arme 15 der Spangeneinheit 14 sind in dem Nutelement 6a aufgenommen, sodass eine formschlüssige Verriegelung vorliegt.

Fig. 4 zeigt eine schematische Seitenansicht der Haltevorrichtung 1 in verriegelter Position.

Fig. 5 zeigt eine schematische Schnittansicht der Haltevorrichtung 1 in verriegelter Position 18.

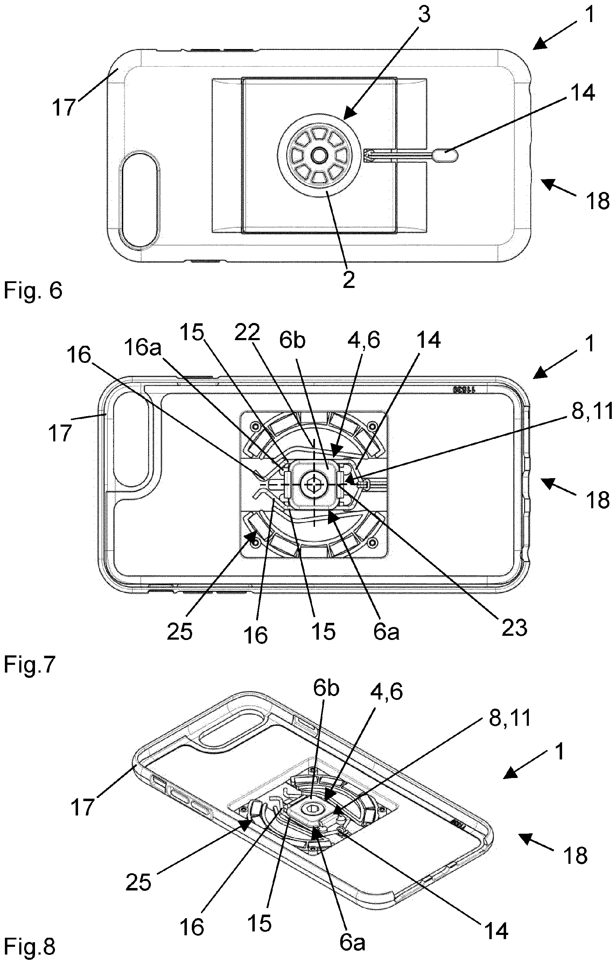

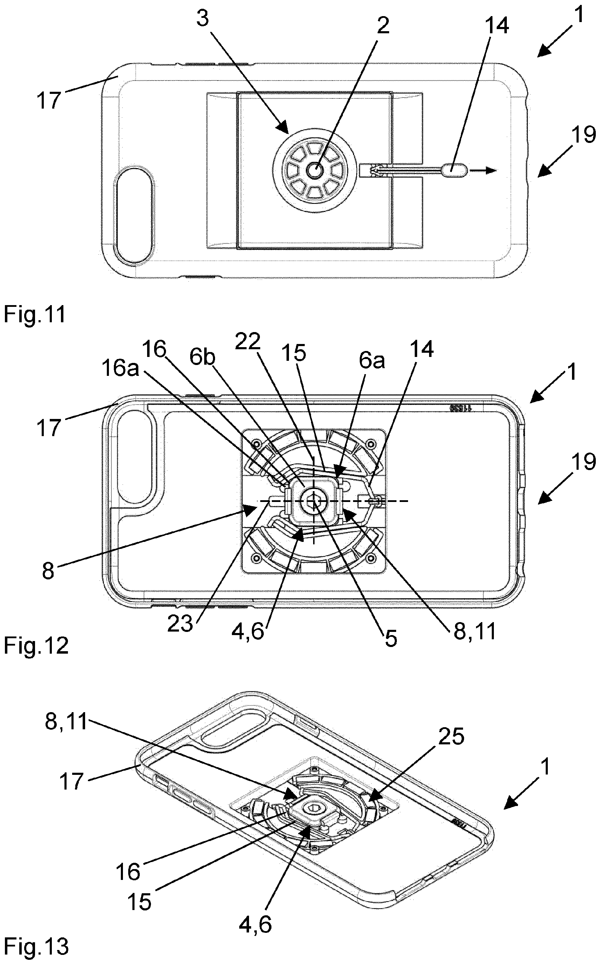

Fig. 6 zeigt eine schematische Ansicht der Haltevorrichtung 1 in verriegelter Position 18 von unten. Die Spangeneinheit 14 ragt hier unterhalb der Aufnahmeschale 17 nach außen und kann an der Lasche gezogen werden, um die Verbindungseinrichtung 3 in eine entriegelte Position 19 zu überführen, vgl. Fig.11.

Fig. 7 zeigt eine schematische Draufansicht auf die Haltevorrichtung 1 in verriegelter Position 18. Die Zweite Adaptereinheit 8 ist hier formschlüssig an der ersten Adaptereinheit 4 aufgenommen. Das Aufnahmeeinrichtung 11 der zweiten Adaptereinheit umschließt das Formelement 6b der Rückhalteeinrichtung 6 der ersten Adaptereinheit 4. Eine Kontur der Aufnahmeeinrichtung 11 ist an die quadratische Querschnittsform des Formelements 6b der Rückhalteeinrichtung 6 angepasst. Das Formelement 6b der Rückhalteeinrichtung 6 ist achsensymmetrisch zu den beiden rechtwinklig zueinander angeordneten Symmetrieebenen 22, 23 ausgebildet, welche sich durch die Mittelachse 5 erstrecken. Durch eine quadratische Querschnittsform des Formelements 6b der Rückhalteeinrichtung 6 der ersten Adaptereinheit 4 ist die zweite Adaptereinheit 8 in zwei verschiedenen Orientierungen verdrehsicher an der ersten Adaptereinheit 4 aufnehmbar, vgl. Fig. 1 und 2.

Zwei Arme 15 der verschieblich an der zweiten Adaptereinheit 8 gelagerten Spangeneinheit 14 erstrecken sich oberhalb der Aufnahmeeinrichtung 11. Die Arme 15 sind hier in der gesicherten Position 19 in dem Nutelement 6a aufgenommen und die Verbindung befindet sich in verriegelter Position 18. Jeder Arm 15 der Spangeneinheit 14 umfasst hier einen Spreizungsabschnitt 16 zur Überführung der Verbindung in eine entriegelte Position 19. Bei einer Verschiebung der Spangeneinheit gleiten die Spreizungsabschnitte 16 an Spreizungselementen 16a der Spangeneinheit 14 ab, sodass sich die Arme 15 der Spangeneinheit 14 aufspreizen und die Verbindung in eine entriegelte Position 19 überführt wird, vgl. Fig. 12.

Weiter umfasst die zweite Adaptereinheit 8 hier eine Magneteinheit 25 mit einer Mehrzahl an magnetischen Körpern, die hier kreisförmig um die Mittelachse 5 der Haltevorrichtung 1 angeordnet sind. Diese dienen hier zur magnetischen Aufnahme und zur Sicherung der Position des mobilen Endgeräts 200 hier an einem induktiven Ladeadapter zum berührungslosen Laden des mobilen Endgeräts 200.

Fig. 8 zeigt eine schematische perspektivische Ansicht der Haltevorrichtung 1 in verriegelter Position 18. Hier ist deutlich zur erkennen, wie die Arme 15 der Spangeneinheit 14 innerhalb des an dem Formelement 6b der Rückhalteeinrichtung 6 der ersten Adaptereinheit 4 ausgebildeten Nutelements 6a aufgenommen sind und die Verbindung verriegeln.

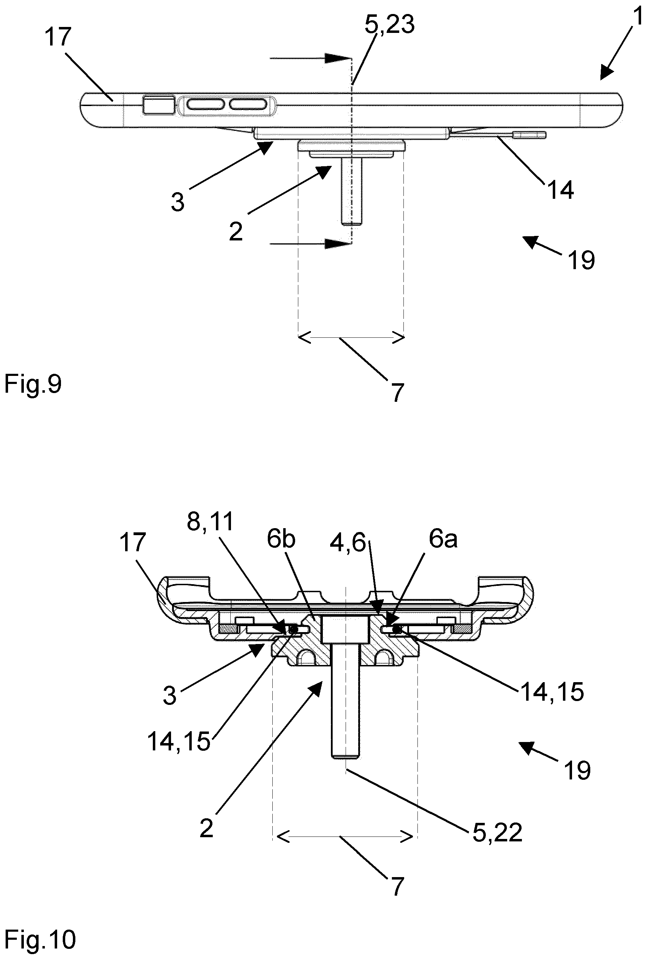

Fig. 9 zeigt eine schematische Seitenansicht der Haltevorrichtung 1 in entriegelter Position 19. Das verschieblich gelagerte Spangenelement 14 ist hier verschoben beziehungsweise herausgezogen, vgl. Fig. 4.

Fig. 10 zeigt eine schematische Schnittansicht der Haltevorrichtung 1 in entriegelter Position 19. Durch die Verschiebung der Spangeneinheit 14 sind die Arme 15 der Spangeneinheit 14 hier nicht mehr innerhalb des Nutelements 6a aufgenommen. Die zweite Adaptereinheit 8 ist nach oben abnehmbar. Die Spangeneinheit 14 ist hier aus einem Draht aus einem Federstahl ausgebildet, sodass sich die Arme 15 hier elastisch nach außen spreizen, wenn die Spangeneinheit 14 verschoben wird. Wird die Spangeneinheit 14 losgelassen, bewegt sich die Spangeneinheit 14 durch die federnden Eigenschaften des Federstahls wieder zurück in die verriegelte Position 18.

Fig. 11 zeigt eine schematische Ansicht der Haltevorrichtung 1 in entriegelter Position 19 von unten. Die verschieblich gelagerte Spangeneinheit 14 befindet sich hier, z. B. durch Druck mit einem Finger des Nutzers, in einem nach außen gezogenen Zustand, vgl. Fig. 6.

Fig. 12 zeigt eine schematische Draufansicht auf die Haltevorrichtung 1 in entriegelter Position 19. Durch die Verschiebung der Spangeneinheit 14 ist die Spangeneinheit 14 gespreizt, sodass sich die Verbindung in entriegelter Position 19 befindet und die zweite Adaptereinheit 8 von der ersten Adaptereinheit 4 abnehmbar ist.

Fig. 13zeigt eine schematische perspektivische Ansicht der Haltevorrichtung 1 in entriegelter Position 19. Hier ist deutlich erkennbar, dass die Arme 15 der Spangeneinheit 14 nicht mehr in dem Nutelement 6a aufgenommen sind, sodass sich die Verbindung in entriegelter Position 19 befindet. Die zweite Adaptereinheit 8 kann einfach nach oben entlang der Mittelachse 5 abgenommen werden.

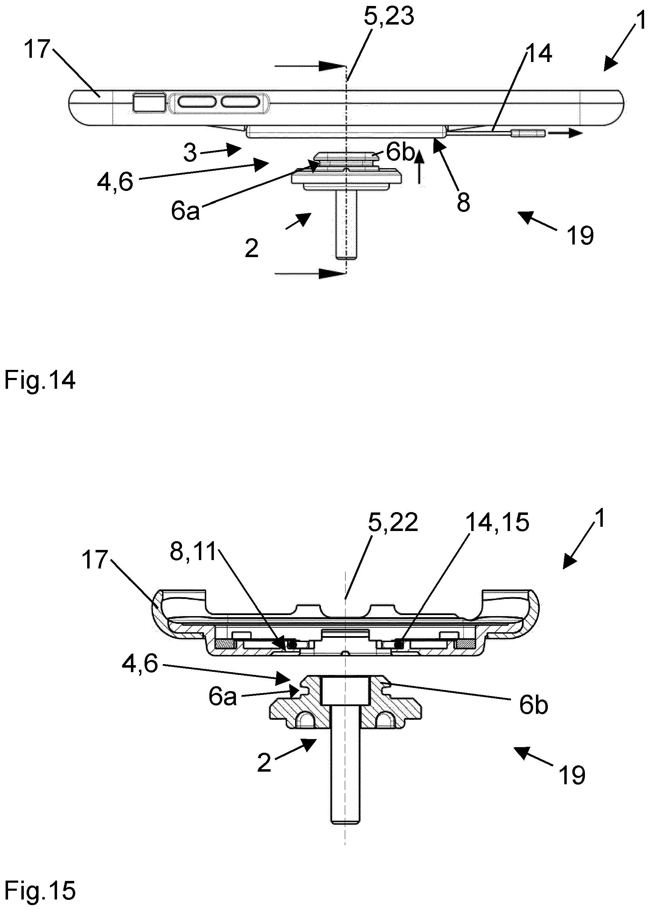

Fig. 14 zeigt eine schematische Seitenansicht der Haltevorrichtung 1, wobei die die zweite Adaptereinheit 8 von der ersten Adaptereinheit 4 abgenommen ist. Die zweite Adaptereinheit 8 mit der Aufnahmeschale 17 ist hier in entriegelter Position 19 nach oben abgezogen, entlang der Mittelachse 5.

Fig. 15 zeigt eine schematische Schnittansicht der Haltevorrichtung 1, wobei die die zweite Adaptereinheit 8 von der ersten Adaptereinheit 4 abgenommen ist. Durch die Spreizung der Spangeneinheit 14 sind die Arme 15 nicht in dem Nutelement 6a aufgenommen in der entriegelten Position 19. Wird die Spangeneinheit 14 losgelassen durch den Nutzer bewegt sich diese wieder in die in die Ausgangsposition durch elastische Rückformung des Federstahls zurück. Die Arme 15 der Spangeneinheit 15 erstrecken sich dann über die Aufnahmeeinrichtung 11, wie im verriegelten Zustand, vgl. Fig. 5. Beim Aufstecken der zweiten Adaptereinheit 8 auf die erste Adaptereinheit 4 verformen sich die Arme 15 der Spangeneinheit 14 elastisch und werden dann automatisch in dem Nutelement 6a der Rückhalteeinrichtung 6 der ersten Adaptereinheit 4 aufgenommen, sodass sich die Verbindung selbstständig beim Aufstecken verriegelt. Alternativ kann der Nutzer durch die Verschiebung die Arme 15 der Spangeneinheit 14 spreizen, anschließend die zweite Adaptereinheit 8 aufstecken und die Spangeneinheit 14 dann loslassen, sodass sich diese in dem Nutelement 6a aufgenommen wird.

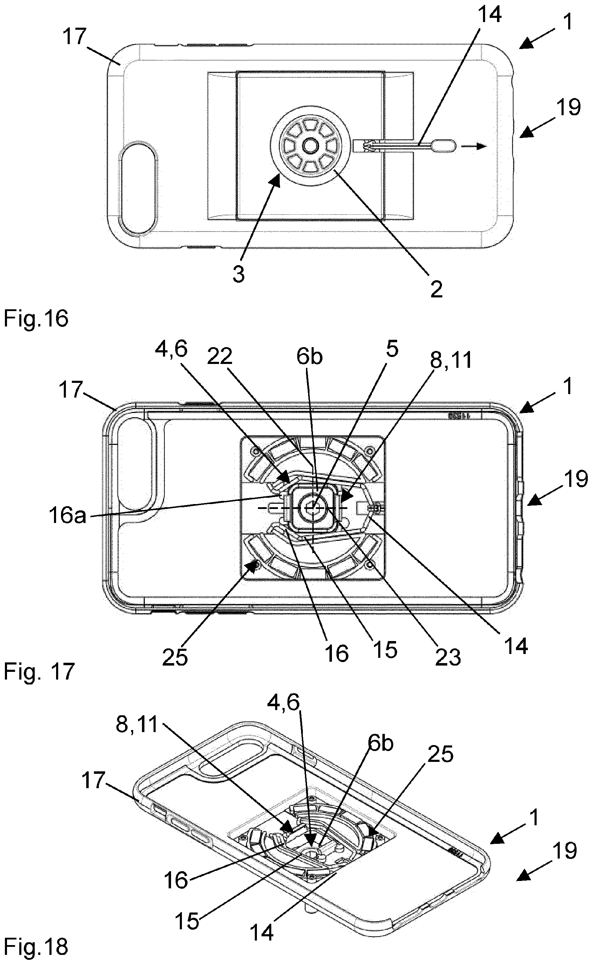

Fig. 16 zeigt eine schematische Ansicht der Haltevorrichtung 1 von unten, wobei die die zweite Adaptereinheit 8 von der ersten Adaptereinheit 4 abgenommen ist.

Fig. 17 zeigt eine schematische Draufansicht auf die Haltevorrichtung 1, wobei die zweite Adaptereinheit 8 von der ersten Adaptereinheit 4 abgenommen ist.

Fig. 18 zeigt eine schematische perspektivische Ansicht der Haltevorrichtung 1, wobei die die zweite Adaptereinheit 8 von der ersten Adaptereinheit 4 abgenommen ist.

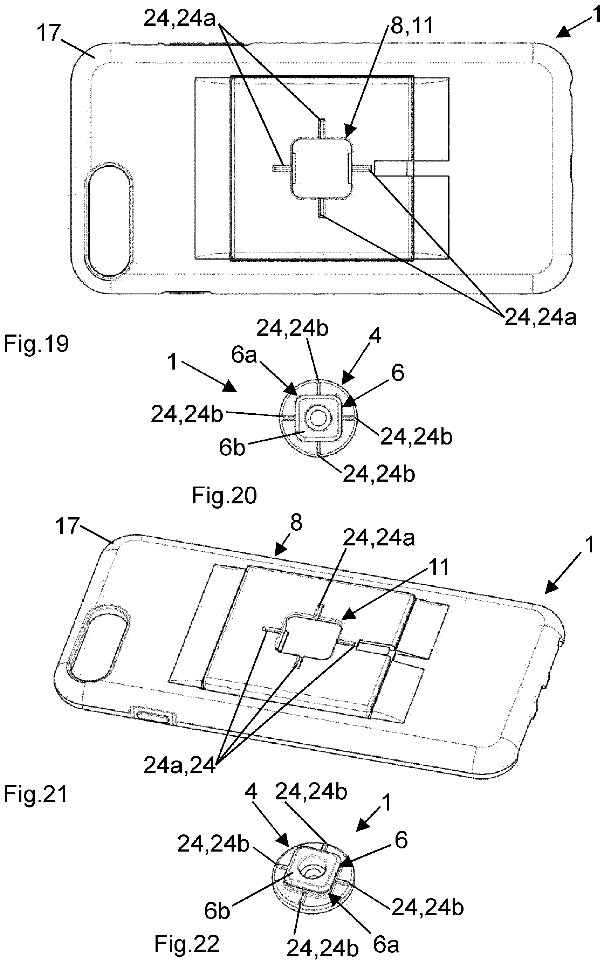

Fig. 19 zeigt eine schematische Ansicht einer zweiten Adaptereinheit 8 einer weiteren Ausführungsform einer erfindungsgemäßen Haltevorrichtung 1 mit Rillen 24a einer Zentriereinheit 24 von unten. An der zweiten Adaptereinheit 8 sind hier Rillen 24a ausgebildet, welche in Rippen 24b eingreifen, die an der ersten Adaptereinheit 4 ausgebildet sind, vgl. Fig. 20.

Fig. 20 zeigt eine schematische Draufsicht einer ersten Adaptereinheit 4 der weiteren Ausführungsform der erfindungsgemäßen Haltevorrichtung 1 mit Rippen 24b der Zentriereinheit 24. Wenn die zweite Adaptereinheit 8 an der ersten Adaptereinheit 4 aufgenommen wird, greifen die Rippen 24b in die Rillen 24a ein und zentrieren die zweite Adaptereinheit 8 zur ersten Adaptereinheit 4. Die Rillen 24a und die Rippen 24b erstrecken sich radial um die Mittelachse 5 nach außen. Dadurch wird ein fester und bewegungsfreier Sitz der zweiten Adaptereinheit 8 an der ersten Adaptereinheit 4 erreicht.

Fig. 21 zeigt eine schematische perspektivische Ansicht der der zweiten Adaptereinheit 8 mit einer Zentriereinheit 24 mit Rillen 24a weiteren Ausführungsform der erfindungsgemäßen Haltevorrichtung 1.

Fig. 22 zeigt eine schematische perspektivische Ansicht der ersten Adaptereinheit 4 mit Rippen 24b der Zentriereinheit 24 nach der weiteren Ausführungsform der erfindungsgemäßen Haltevorrichtung 1.

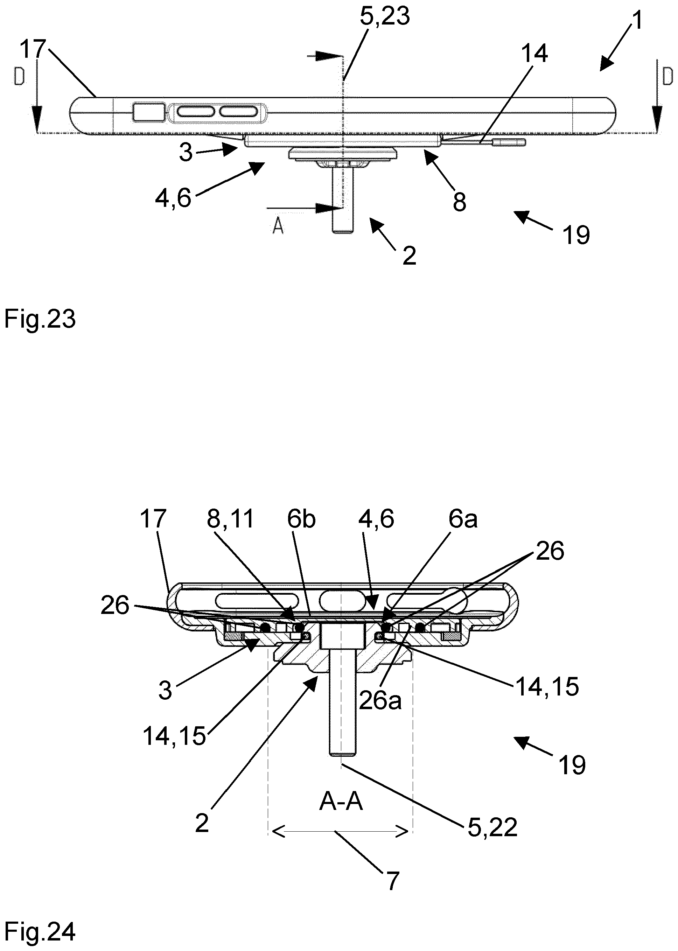

Fig. 23 zeigt eine schematische Seitenansicht einer weiteren Ausführungsform der erfindungsgemäßen Haltevorrichtung 1 mit einer elastischen Federeinheit 26.

Fig. 24 eine schematische Schnittansicht der Haltevorrichtung 1 mit der elastischen Federeinheit 26. Die Federeinheit 26 umfasst hier zwei Federelemente 26, die hier aus einem Elastomer hier als O-Ringe 26 ausgebildet. Die Federelemente 26 sind hier sind an der zweiten Adaptereinheit 8 aufgenommen direkt benachbart zur Aufnahmeeinrichtung 11. Die Federelemente 26 sind gegenüberliegend ab der Aufnahmeeinrichtung 11 angeordnet. Die O-ringe 26 verspannen sich gegen das Formelement 6b der Rückhalteeinrichtung 6. Dadurch wird ein spielfreier Halt der zweiten Adaptereinheit 8 an der ersten Adaptereinheit 4 der Verbindungseinrichtung 3 ermöglicht. Haltekräfte werden hier durch die Federeinheit 26 zwischen der zweiten Adaptereinheit 8 und der ersten Adaptereinheit 4 übertragen. Die Federeinheit 26 kompensiert hierbei ein fertigungsbedingtes Spiel zwischen der zweiten Adaptereinheit 8 und der ersten Adaptereinheit 4. Die Federelemente 26 verformen sich hier beim Aufstecken an dem Formelement 6b, sodass ein komfortables Aufstecken möglich ist.

Fig, 25 zeigt eine weitere schematische Schnittansicht der Haltevorrichtung 1 mit der elastischen Federeinheit 26 In der Draufsicht ist der Teil um die Federeinheit 26 geschnitten dargestellt. Die Federelement 26 sind hier auf Aufnahmen 26a an der zweiten Adaptereinheit 8 aufgesteckt.

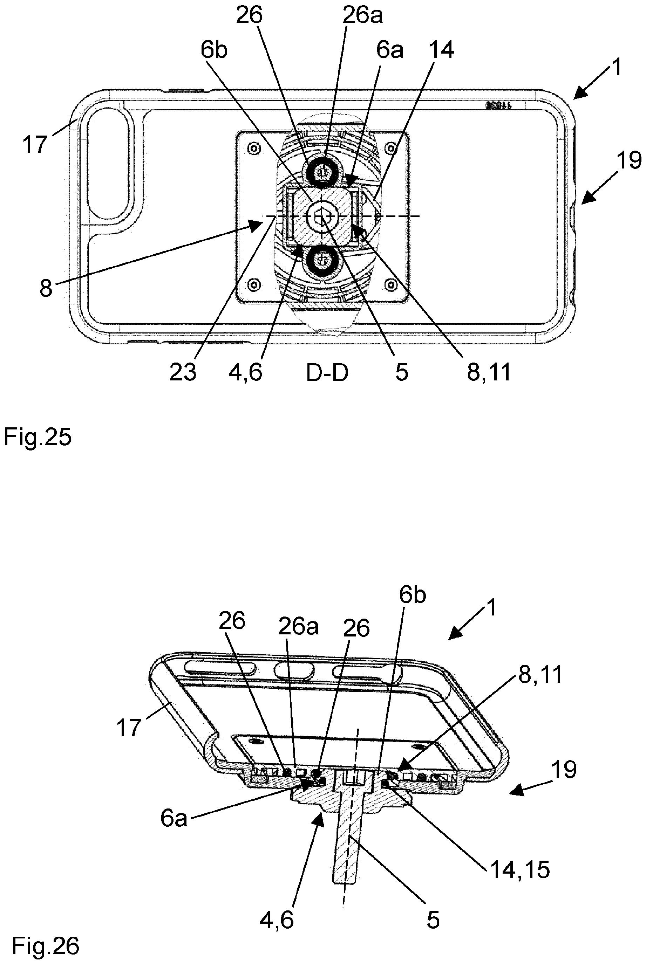

Fig. 26 eine weitere schematische Schnittansicht der Haltevorrichtung 1 mit der elastischen Federeinheit 26. Die Anordnung der Federelemente 26 an den Aufnahmen 26a und die Funktion ist hier noch einmal deutlich zu erkennen.

### Bezugszeichenliste:

- 1: Haltevorrichtung
- 2: Befestigungseinrichtung
- 3: Verbindungseinrichtung
- 4: erste Adaptereinheit
- 5: Mittelachse
- 6: Rückhalteeinrichtung
- 6a: Nutelement
- 6b: Formelement
- 7: maximaler Außendurchmesser
- 8: zweite Adaptereinheit
- 11: Aufnahmeeinrichtung
- 12: Erste Stellung
- 13: Zweite Stellung
- 14: Spangeneinheit
- 15: Arm der Spangeneinheit
- 16: Spreizungsabschnitt
- 16a: Spreizungselement
- 17: Aufnahmeschale
- 18: verriegelte Position
- 19: entriegelte Position
- 22: erste Symmetrieebene
- 23: zweite Symmetrieebene
- 24: Zentrierungseinheit
- 24a: Rille
- 24b: Rippe
- 25: Magneteinheit
- 26: Elastische Federeinheit, Federelement, O-ring
- 26a: Aufnahme des Federelements
- 100: Lenkergeführtes Fahrzeug, Fahrrad
- 110: Lenkereinrichtung
- 111: Lenkervorbau
- 113: Lenker
- 200: Anbaukomponente, mobiles Endgerät, Satteltasche, Packtasche, Beleuchtungselement, Trinkflaschenhalter, Beleuchtungselement, Luftpumpeneinheit, Werkzeugeinheit

## Patentansprüche

1. Haltevorrichtung (1) für die Anbringung einer Anbaukomponente, wie eines mobilen Endgeräts (200), eines Trinkflaschenhalters (200), eines Radschützers (200), einer Satteltasche (200), einer Packtasche (200), eines Beleuchtungselements (200), einer Luftpumpeneinheit (200), einer Werkzeugeinheit (200) oder dergleichen an einem lenkergeführten Fahrzeug (100), wie einem Fahrrad (100), umfassend:
- wenigstens eine Befestigungseinrichtung (2) zur Befestigung der Haltevorrichtung (1) an dem Fahrzeug (100); und
- wenigstens eine Verbindungseinrichtung (3) zur Verbindung des mobilen Endgeräts (200) mit der Befestigungseinrichtung (2);
**dadurch gekennzeichnet, dass**
die Verbindungseinrichtung (2) wenigstens eine erste Adaptereinheit (4) mit wenigstens einer Rückhalteeinrichtung (6) zur Aufnahme einer zweiten Adaptereinheit (8) der Verbindungseinrichtung (3) aufweist und wobei die Rückhalteeinrichtung (6) wenigstens ein Nutelement (6a) zur formschlüssigen Verriegelung der Verbindung aufweist.

2. Haltevorrichtung (1) nach Anspruch 1, wobei wenigstens das Formelement (6b) und insbesondere die Rückhalteeinrichtung (6) achsensymmetrisch zu wenigstens einer ersten Symmetrieebene (22) und insbesondere zu einer zweiten zwei Symmetrieebene (23) ist.

3. Haltevorrichtung (1) nach einem der vorhergehenden Ansprüche, wobei das Nutelement (6a) sich wenigstens teilweise umfänglich um ein sich im Wesentlichen entlang der Mittelachse (5) ausgebildetes Formelement (6b) der Rückhalteeinrichtung (6) erstreckt.

4. Haltevorrichtung (1) nach dem vorhergehenden Anspruch, wobei das Formelement (6b) einen mehreckigen und insbesondere einen quadratischen Querschnitt aufweist.

5. Haltevorrichtung (1) nach einem der vorhergehenden Ansprüche, wobei die erste Adaptereinheit (4) und/oder die Befestigungseinrichtung (2) jeweils einen maximalen Außendurchmesser (7) von weniger als 50 mm und bevorzugt weniger 40 mm und besonders bevorzugt weniger als 30 mm aufweisen.

6. Haltevorrichtung (1) nach einem der vorhergehenden Ansprüche, wobei die Verbindungseinrichtung (2) eine zweite Adaptereinheit (8) umfasst, welche an der ersten Adaptereinheit (4) aufnehmbar ist.

7. Haltevorrichtung (1) nach dem vorhergehenden Anspruch, wobei die zweite Adaptereinheit (8) wenigstens eine Aufnahmeeinrichtung (11) zur formschlüssigen Aufnahme an der Rückhalteeinrichtung (6) aufweist.

8. Haltevorrichtung (1) nach einem der beiden vorhergehenden Ansprüche, wobei die zweite Adaptereinheit (8) wenigstens eine elastisch verformbare Spangeneinheit (14) zur Verriegelung der Verbindung und insbesondere zum Eingreifen in das Nutelement (6a) umfasst.

9. Haltevorrichtung (1) nach dem vorhergehenden Anspruch, wobei sich wenigstens ein Abschnitt eines Arms (15) der Spangeneinheit (14) über, und insbesondere oberhalb und/oder unterhalb, die Aufnahmeeinrichtung (11) erstreckt, und wobei sich insbesondere wenigstens zwei Arme (15) der Spangeneinheit (16) wenigstens teilweise über die Aufnahmeeinrichtung (11) erstrecken.

10. Haltevorrichtung (1) nach einem der drei vorhergehenden Ansprüche, wobei die Spangeneinheit (14) verschieblich an der zweiten Adaptereinheit (8) gelagert ist und wobei insbesondere wenigstens ein Arm (15) der Spangeneinheit (14) wenigstens einen Spreizungsabschnitt (16) zur Entriegelung der Verbindung bei einer Verschiebung der Spangeneinheit (14) umfasst.

11. Haltevorrichtung (1) nach einem der fünf vorhergehenden Ansprüche, wobei die Anbaukomponente (200) an der zweiten Adaptereinheit (8) aufgenommen ist.

12. Haltevorrichtung (1) nach einem der sechs vorhergehenden Ansprüche, wobei die zweite Adaptereinheit (8) wenigstens eine Magneteinheit (25) insbesondere zur Aufnahme des mobilen Endgeräts (200) an einem induktiven Ladeadapter.

13. Haltevorrichtung (1) nach einem der sieben vorhergehenden Ansprüche, wobei die zweite Adaptereinheit (8) und insbesondere die aufgenommene Anbaukomponente (200), relativ zu der ersten Adaptereinheit (4) in zwei verschiedenen Stellungen (12, 13) verriegelt werden kann, wobei die beiden Stellungen (12, 13) insbesondere einen Winkel von 90° miteinander einschließen.

14. Haltevorrichtung (1) nach einem der vorhergehenden Ansprüche, wobei die Verbindungseinrichtung (3) wenigstens eine Zentrierungseinheit (24) zur Zentrierung der zweiten Adaptereinheit (8) an der ersten Adaptereinheit (4) umfasst.

15. Haltevorrichtung (1) nach einem der vorhergehenden Ansprüche, wobei die Verbindungseinrichtung (3) wenigstens eine elastische Federeinheit (26) umfasst, insbesondere zur spielfreien Aufnahme der zweiten Adaptereinheit (8) an der ersten Adaptereinheit (4) umfasst.

16. Lenkergeführtes Fahrzeug (100), welches insbesondere als Fahrrad ausgebildet ist, umfassend eine Haltevorrichtung (1) nach einem der vorhergehenden Ansprüche, und wobei die Haltevorrichtung (1) insbesondere wenigstens teilweise an einem Lenkervorbau (111), einer Lenkereinrichtung (110) oder einer Rahmeneinrichtung des Fahrzeugs (100) montiert ist.

## Geänderte Patentansprüche

### Geänderte Patentansprüche gemäss Regel 137(2) EPÜ.

**1.** Haltevorrichtung (1) für die Anbringung einer Anbaukomponente, wie eines mobilen Endgeräts (200), eines Trinkflaschenhalters (200), eines Radschützers (200), einer Satteltasche (200), einer Packtasche (200), eines Beleuchtungselements (200), einer Luftpumpeneinheit (200), einer Werkzeugeinheit (200) oder dergleichen an einem lenkergeführten Fahrzeug (100), wie einem Fahrrad (100), umfassend:
- wenigstens eine Befestigungseinrichtung (2) zur Befestigung der Haltevorrichtung (1) an dem Fahrzeug (100); und
- wenigstens eine Verbindungseinrichtung (3) zur Verbindung des mobilen Endgeräts (200) mit der Befestigungseinrichtung (2);
**dadurch gekennzeichnet, dass**
die Verbindungseinrichtung (2) wenigstens eine erste Adaptereinheit (4) und eine zweite Adaptereinheit (8) umfasst, welche an der ersten Adaptereinheit (4) aufnehmbar ist, und wobei die erste Adaptereinheit (4) wenigstens eineRückhalteeinrichtung (6) zur Aufnahme der zweiten Adaptereinheit (8) der Verbindungseinrichtung (3) aufweist und wobei die Rückhalteeinrichtung (6) wenigstens ein Nutelement (6a) zur formschlüssigen Verriegelung der Verbindung aufweist wobei die zweite Adaptereinheit (8) wenigstens eine elastisch verformbare Spangeneinheit (14) zur Verriegelung der Verbindung und insbesondere zum Eingreifen in das Nutelement (6a) umfasst.

**2.** Haltevorrichtung (1) nach Anspruch 1, wobei das Nutelement (6a) sich wenigstens teilweise umfänglich um ein sich im Wesentlichen entlang der Mittelachse (5) ausgebildetes Formelement (6b) der Rückhalteeinrichtung (6) erstreckt.

**3.** Haltevorrichtung (1) nach dem vorhergehenden Anspruch, wobei wenigstens das Formelement (6b) und insbesondere die Rückhalteeinrichtung (6) achsensymmetrisch zu wenigstens einer ersten Symmetrieebene (22) und insbesondere zu einer zweiten zwei Symmetrieebene (23) ist.

**4.** Haltevorrichtung (1) nach einem der beiden vorhergehenden Ansprüche, wobei das Formelement (6b) einen mehreckigen und insbesondere einen quadratischen Querschnitt aufweist.

**5.** Haltevorrichtung (1) nach einem der vorhergehenden Ansprüche, wobei die erste Adaptereinheit (4) und/oder die Befestigungseinrichtung (2) jeweils einen maximalen Außendurchmesser (7) von weniger als 50 mm und bevorzugt weniger 40 mm und besonders bevorzugt weniger als 30 mm aufweisen.

**6.** Haltevorrichtung (1) nach einem der vorhergehenden Ansprüche, wobei die zweite Adaptereinheit (8) wenigstens eine Aufnahmeeinrichtung (11) zur formschlüssigen Aufnahme an der Rückhalteeinrichtung (6) aufweist.

**7.** Haltevorrichtung (1) nach einem der vorhergehenden Ansprüche, wobei sich wenigstens ein Abschnitt eines Arms (15) der Spangeneinheit (14) über, und insbesondere oberhalb und/oder unterhalb, die Aufnahmeeinrichtung (11) erstreckt, und wobei sich insbesondere wenigstens zwei Arme (15) der Spangeneinheit (16) wenigstens teilweise über die Aufnahmeeinrichtung (11) erstrecken.

**8.** Haltevorrichtung (1) nach einem der vorhergehenden Ansprüche, wobei die Spangeneinheit (14) verschieblich an der zweiten Adaptereinheit (8) gelagert ist und wobei insbesondere wenigstens ein Arm (15) der Spangeneinheit (14) wenigstens einen Spreizungsabschnitt (16) zur Entriegelung der Verbindung bei einer Verschiebung der Spangeneinheit (14) umfasst.

**9.** Haltevorrichtung (1) nach einem der vorhergehenden Ansprüche, wobei die Anbaukomponente (200) an der zweiten Adaptereinheit (8) aufgenommen ist.

**10.** Haltevorrichtung (1) nach einem der vorhergehenden Ansprüche, wobei die zweite Adaptereinheit (8) wenigstens eine Magneteinheit (25) insbesondere zur Aufnahme des mobilen Endgeräts (200) an einem induktiven Ladeadapter.

**11.** Haltevorrichtung (1) nach einem der vorhergehenden Ansprüche, wobei die zweite Adaptereinheit (8) und insbesondere die aufgenommene Anbaukomponente (200), relativ zu der ersten Adaptereinheit (4) in zwei verschiedenen Stellungen (12, 13) verriegelt werden kann, wobei die beiden Stellungen (12, 13) insbesondere einen Winkel von 90° miteinander einschließen.

**12.** Haltevorrichtung (1) nach einem der vorhergehenden Ansprüche, wobei die Verbindungseinrichtung (3) wenigstens eine Zentrierungseinheit (24) zur Zentrierung der zweiten Adaptereinheit (8) an der ersten Adaptereinheit (4) umfasst.

**13.** Haltevorrichtung (1) nach einem der vorhergehenden Ansprüche, wobei die Verbindungseinrichtung (3) wenigstens eine elastische Federeinheit (26) umfasst, insbesondere zur spielfreien Aufnahme der zweiten Adaptereinheit (8) an der ersten Adaptereinheit (4) umfasst.

**14.** Lenkergeführtes Fahrzeug (100), welches insbesondere als Fahrrad ausgebildet ist, umfassend eine Haltevorrichtung (1) nach einem der vorhergehenden Ansprüche, und wobei die Haltevorrichtung (1) insbesondere wenigstens teilweise an einem Lenkervorbau (111), einer Lenkereinrichtung (110) oder einer Rahmeneinrichtung des Fahrzeugs (100) montiert ist

**1.** Haltevorrichtung (1) für die Anbringung einer Anbaukomponente, wie eines mobilen Endgeräts (200), eines Trinkflaschenhalters (200), eines Radschützers (200), einer Satteltasche (200), einer Packtasche (200), eines Beleuchtungselements (200), einer Luftpumpeneinheit (200), einer Werkzeugeinheit (200) oder dergleichen an einem lenkergeführten Fahrzeug (100), wie einem Fahrrad (100), umfassend:
- wenigstens eine Befestigungseinrichtung (2) zur Befestigung der Haltevorrichtung (1) an dem Fahrzeug (100); und
- wenigstens eine Verbindungseinrichtung (3) zur Verbindung des mobilen Endgeräts (200) mit der Befestigungseinrichtung (2);
**dadurch gekennzeichnet, dass**
die Verbindungseinrichtung (2) wenigstens eine erste Adaptereinheit (4) und eine zweite Adaptereinheit (8) umfasst, welche an der ersten Adaptereinheit (4) aufnehmbar ist, und wobei die erste Adaptereinheit (4) wenigstens eineRückhalteeinrichtung (6) zur Aufnahme der zweiten Adaptereinheit (8) der Verbindungseinrichtung (3) aufweist und wobei die Rückhalteeinrichtung (6) wenigstens ein Nutelement (6a) zur formschlüssigen Verriegelung der Verbindung aufweist wobei die zweite Adaptereinheit (8) wenigstens eine Aufnahmeeinrichtung (11) zur formschlüssigen Aufnahme an der Rückhalteeinrichtung (6) aufweist, und wobei die zweite Adaptereinheit (8) wenigstens eine elastisch verformbare Spangeneinheit (14) zur Verriegelung der Verbindung und insbesondere zum Eingreifen in das Nutelement (6a) umfasst und wobei sich wenigstens ein Abschnitt eines Arms (15) der Spangeneinheit (14) über die Aufnahmeeinrichtung (11) erstreckt.

**2.** Haltevorrichtung (1) nach Anspruch 1, wobei das Nutelement (6a) sich wenigstens teilweise umfänglich um ein sich im Wesentlichen entlang der Mittelachse (5) ausgebildetes Formelement (6b) der Rückhalteeinrichtung (6) erstreckt.

**3.** Haltevorrichtung (1) nach dem vorhergehenden Anspruch, wobei wenigstens das Formelement (6b) und insbesondere die Rückhalteeinrichtung (6) achsensymmetrisch zu wenigstens einer ersten Symmetrieebene (22) und insbesondere zu einer zweiten zwei Symmetrieebene (23) ist.

**4.** Haltevorrichtung (1) nach einem der beiden vorhergehenden Ansprüche, wobei das Formelement (6b) einen mehreckigen und insbesondere einen quadratischen Querschnitt aufweist.

**5.** Haltevorrichtung (1) nach einem der vorhergehenden Ansprüche, wobei die erste Adaptereinheit (4) und/oder die Befestigungseinrichtung (2) jeweils einen maximalen Außendurchmesser (7) von weniger als 50 mm und bevorzugt weniger 40 mm und besonders bevorzugt weniger als 30 mm aufweisen.

**6.** Haltevorrichtung (1) nach einem der vorhergehenden Ansprüche, wobei die Spangeneinheit (14) verschieblich an der zweiten Adaptereinheit (8) gelagert ist und wobei insbesondere wenigstens ein Arm (15) der Spangeneinheit (14) wenigstens einen Spreizungsabschnitt (16) zur Entriegelung der Verbindung bei einer Verschiebung der Spangeneinheit (14) umfasst.

**7.** Haltevorrichtung (1) nach einem der vorhergehenden Ansprüche, wobei die Anbaukomponente (200) an der zweiten Adaptereinheit (8) aufgenommen ist.

**8.** Haltevorrichtung (1) nach einem der vorhergehenden Ansprüche, wobei die zweite Adaptereinheit (8) wenigstens eine Magneteinheit (25) insbesondere zur Aufnahme des mobilen Endgeräts (200) an einem induktiven Ladeadapter.

**9.** Haltevorrichtung (1) nach einem der vorhergehenden Ansprüche, wobei die zweite Adaptereinheit (8) und insbesondere die aufgenommene Anbaukomponente (200), relativ zu der ersten Adaptereinheit (4) in zwei verschiedenen Stellungen (12, 13) verriegelt werden kann, wobei die beiden Stellungen (12, 13) insbesondere einen Winkel von 90° miteinander einschließen.

**10.** Haltevorrichtung (1) nach einem der vorhergehenden Ansprüche, wobei die Verbindungseinrichtung (3) wenigstens eine Zentrierungseinheit (24) zur Zentrierung der zweiten Adaptereinheit (8) an der ersten Adaptereinheit (4) umfasst.

**11.** Haltevorrichtung (1) nach einem der vorhergehenden Ansprüche, wobei die Verbindungseinrichtung (3) wenigstens eine elastische Federeinheit (26) umfasst, insbesondere zur spielfreien Aufnahme der zweiten Adaptereinheit (8) an der ersten Adaptereinheit (4) umfasst.

**12.** Lenkergeführtes Fahrzeug (100), welches insbesondere als Fahrrad ausgebildet ist, umfassend eine Haltevorrichtung (1) nach einem der vorhergehenden Ansprüche, und wobei die Haltevorrichtung (1) insbesondere wenigstens teilweise an einem Lenkervorbau (111), einer Lenkereinrichtung (110) oder einer Rahmeneinrichtung des Fahrzeugs (100) montiert ist.
